(19) Europäisches Patentamt
European Patent Office
Office européen des brevets

(11) **EP 2 049 274 B1**

(12) **EUROPÄISCHE PATENTSCHRIFT**

(45) Veröffentlichungstag und Bekanntmachung des Hinweises auf die Patenterteilung:
**06.06.2012 Patentblatt 2012/23**

(21) Anmeldenummer: **07801595.5**

(22) Anmeldetag: **10.08.2007**

(51) Int Cl.:
**B07B 1/42** *(2006.01)*          **B65G 27/00** *(2006.01)*

(86) Internationale Anmeldenummer:
**PCT/EP2007/007092**

(87) Internationale Veröffentlichungsnummer:
**WO 2008/017494 (14.02.2008 Gazette 2008/07)**

(54) **VERFAHREN UND VORRICHTUNG ZUR ULTRASCHALLANREGUNG VON STRUKTUREN BELIEBIGER GEOMETRIE ZUM ZWECK DER VERRINGERUNG VON REIBUNG**

METHOD AND DEVICE FOR ULTRASOUND EXCITATION OF STRUCTURES OF ANY GEOMETRY FOR THE PURPOSE OF REDUCING FRICTION

PROCÉDÉ ET DISPOSITIF D'ACTIVATION PAR ULTRASONS DE STRUCTURES DE GÉOMÉTRIE QUELCONQUE EN VUE DE RÉDUIRE LE FROTTEMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.08.2006   DE 102006037638**
**05.10.2006   DE 102006047591**
**23.03.2007   DE 102007014635**

(43) Veröffentlichungstag der Anmeldung:
**22.04.2009   Patentblatt 2009/17**

(73) Patentinhaber: **Artech Systems AG**
**8590 Romanshorn 1 (CH)**

(72) Erfinder: **KISING, Jürgen**
**CH-8280 Kreuzlingen (CH)**

(74) Vertreter: **Neunert, Peter Andreas**
**Westphal - Mussgnug & Partner**
**Patentanwälte**
**Am Riettor 5**
**78048 Villingen-Schwenningen (DE)**

(56) Entgegenhaltungen:
**WO-A-92/12807          DE-A1- 4 418 175**
**US-A1- 2002 060 230**

**EP 2 049 274 B1**

**Beschreibung**

Die Erfindung betrifft ein Verfahren zur Ultraschallanregung gemäß einigen Merhmalen des Anspruchs 1 und eine Vorrichtung zur Ultraschallanregung gemäß dem Oberbegriff des Anspruchs 13.

In der Industrie gibt es eine Vielzahl von Anwendungen, bei denen es wünschenswert ist, die Reibung zwischen den Teilchen und/oder den Teilchen und einem mit ihnen in Kontakt stehenden System zu verringern. Einige Beispiele für solche Anwendungen sind:

- das Ultraschallsieben, bei dem durch Ultraschallanregung des Siebgewebes der Durchsatz erheblich gesteigert werden kann. Der Durchsatz beim Ultraschallsieben hängt von der Verstopfungsneigung der Siebgewebe ab. Durch den Einsatz von Ultraschall werden die Gewebeöffnungen frei gehalten, da die Haftreibung durch die Ultraschallbewegung in die geringere Gleitreibung überführt wird und Pulverbrücken gebrochen werden.

- der Transport von Schüttgütern und Farbpulvern in Röhren oder auf Plattformen. Die durch die Ultraschallschwingung reduzierte Reibung zwischen dem Schüttgut und der Plattform oder dem Leitungsrohr reduziert. Dadurch kann der Volumenstrom besser dosiert und der Durchsatz erhöht werden.

- die Anregung von Grenzflächen zwischen sich bewegenden Teilchen oder zwischen festen und bewegten Oberflächen. Generell führt der durch den Einsatz von Ultraschall bedingte Übergang von der Haftreibung zur Gleitreibung zu einer Reduzierung des mechanischen Widerstandes und kann so den Verschleiß bzw. den Energieaufwand bei mechanischen Bewegungsprozessen reduzieren.

Nach dem Stand der Technik war es bislang üblich, zur Ultraschallanregung die Eigenschwingungsfrequenz des in Schwingung zu versetzenden mechanischen Körpers an die Konverterfrequenz anzupassen. Ein derartiges Siebsystem ist beispielsweise der DE 4418175 zu entnehmen.

Problematisch ist allerdings bei Verwendung dieses Ansatzes, dass die Abstimmung des in Schwingung zu versetzenden mechanischen Körpers auf die Konverterfrequenz schwierig und mit hohem Aufwand verbunden ist. Bereits übliche fertigungstechnische Toleranzen, insbesondere an Schweiß- oder sonstigen Verbindungsstellen, oder Schwankungen der akustischen Parameter wie E-Modul, Schallgeschwindigkeit und Dichte führen zu mechanischen Körpern mit leicht unterschiedlichen Eigenfrequenzen, die bereits so verschieden voneinander sind, dass z.B. der Betrieb mehrerer Siebe mit einem Ultraschallkonverter nach dem Stand der Technik nicht möglich ist.

Geht man zu komplexeren mechanischen Körpern über, sind deren Einzelresonanzen meist nicht mehr klar ausgeprägt bzw. man erhält ein Gebirge von Resonanzen, wie nachstehend gezeigt. Dieses Schwingungsverhalten steht prinzipiell einer durchsatzfördernden Ultraschallanregung nicht im Wege. Beispielsweise ist es aus der EP 0 567 551 B1 bekannt, die Rahmen von Siebsystemen zu einer erschwungenen Schwingung außerhalb der Resonanzfrequenz anzuregen.

Wenn trotzdem oftmals Probleme beim Betrieb ultraschallangeregten Systemen, die nicht auf die Frequenz des Ultraschallkonverters abgestimmt sind, auftreten, so ist dies eine Folge der bislang verwendeten Ultraschallgeneratortechnologie, bei der der Phasenwinkel zu Regelung des Generators herangezogen wird.

Dieses Regelungsprinzip funktioniert umso besser, je klarer der Nulldurchgang beim Vorzeichenwechsel der Phase bestimmt werden kann, das heißt insbesondere bei Resonanzsystemen mit hoher Güte, welche ihrerseits nur bei exakt abgestimmten Resonatoren ohne starke Dämpfungswirkung erzielt werden kann.

Umgekehrt werden Resonanzen, die keinen eindeutigen Nulldurchgang der Phase aufzeigen nicht erkannt und die Regelung versagt. Kommt es zur Verschlechterung der Güte oder der Phaseninformation während des Betriebes, kann es auch zu einem völligen Ausfall der Phasenregelung kommen und der Generator geht in Überlast.

Während eine Anwendung der Phasenregelung somit in Systemen sehr hoher Güte, wie sie z.B. beim Ultraschallschweißen verwendet werden müssen, durchaus vorteilhaft ist, wird diese Vorgehensweise anfällig und instabil, wenn die Güte des schwingenden Systems nicht hinreichend ist. Dementsprechend muss durch aufwändige, individuelle Anpassung des schwingenden Systems auf die angestrebte Resonanzfrequenz sichergestellt werden, dass dies der Fall ist.

Ein weiteres Problem bei einer Resonanzanregung besteht darin, dass insbesondere bei komplexen Resonanzsystemen die resultierende Resonanzamplitude nicht kontrollierbar bestimmt ist. Dies ist problematisch, weil diese Größe die Verlustleistung bestimmt, die ihrerseits zur Erwärmung des Systems führt. Eine unkontrollierte Erwärmung als solche ist bereits in vielen Fällen nachteilig, weil ein Verbacken des Pulvers oder Schüttgutes gefördert wird. Dieses Problem verstärkt sich bei Materialien, die bereits bei niedrigen Temperaturen weich werden oder anfangen zu schmelzen.

Darüber hinaus ist die Güte des angeregten Systems temperaturabhängig. Bei Resonanzanregung ist es daher möglich, dass die Erwärmung des Systems die Güte verbessert, was wiederum zu einer höheren Resonanzamplitude und damit zu einer weiteren Erwärmung führt, die die Güte weiter verbessert.

Aus der US 2002/0060230 A1 Sind eine Vorrichtung gemäß dem Oberbegriff den Anspruchs 13 und ein Verfahren zur ultraschallanregung von Strukturen bekannt. Dieler Dokument offenbart ein Siebsystem mit einem Generator, einem von dem Generator angesteuerten Ultraschallkonverter und einer mechanischen Struktur, bei dem ein Transducer an dem Siebsystem angeordnet ist, dessen Signal als Maß für die mechanischen Schwingungen des Systems zur Anpassung der vom Generator abgegebenen Steuerspannung verwendet wird, um die Durchflussrate von Material durch das Siebsystem zu kontrollieren.

Ausgehend von diesem Stand der Dinge stellt sich das Problem, ein Verfahren und eine Vorrichtung zur Ultraschallanregung bereitzustellen, womit bei geringster Erwärmung des Systems die Anregung beliebig komplexer Strukturen und insbesondere auch mehrerer Siebe ermöglicht werden.

Dieses Problem wird gelöst durch ein Verfahren zur Ultra-schallanregung mit den Merkmalen des Anspruchs 1 und eine Vorrichtung zur Ultraschallanregung mit den Merkmalen des Anspruchs 13.

Vorteilhafte Ausgestaltungen der Erfindung sind den jeweils rückbezogenen Unteransprüchen zu entnehmen.

Der Erfindung liegt die Erkenntnis zu Grunde, dass es vorteilhaft ist, Schwingungsfrequenz und -amplitude des Ultraschallkonverters mit Hilfe der Generatorregelung an das Schwingungsverhalten des Gesamtsystems anzupassen statt zu versuchen, das Schwingungsverhalten resonierender Schallleiter an eine Eigenfrequenz des Ultraschallkonverters anzupassen.

Gemäß dem erfindungsgemäßen Verfahren nach Anspruch 1 wird dementsprechend nach einem ersten Schritt des Herstellens der Verbindung zwischen Generator, Ultraschallkonverter und den mit Ultraschall anzuregenden Systemen in einem zweiten Schritt der Arbeitspunkt des Systems durch Variation des (Generator-)Parameters Frequenz des Generators über einen spezifischen Bereich und durch Messung des Stroms und/oder der Spannung, der/die durch die Leistungsaufnahme bei dem aktuellen Frequenzwert bestimmt ist, gesucht und festgesetzt. Die Ultraschallanregung erfolgt dann in einem dritten Verfahrensschritt an dem Arbeitspunkt oder in seiner Umgebung, wobei der einmal festgesetzte Arbeitspunkt oder die festgesetzte Umgebung nicht mehr nachgesteuert wird, aber die Frequenz innerhalb der festgesetzten Umgebung des Arbeitspunktes variiert werden kann.

Selbst in dem Fall, in dem es sich um eine Festanregung an einem Arbeitspunkt handelt, wird es sich in der Regel dabei nicht um eine Resonanzanregung eines zum Siebsystem gehörenden Schallleiters handeln, sondern um eine Anregung der Dispersionsamplitude. Die durch den Ultraschallkonverter erzeugte Schwingung wird dabei vom angeregten Schallleiter oder Siebrahmen mittels Verbindungselementen auf den nicht direkt vom Ultraschallkonverter angeregten Siebrahmen oder Schallleiter übertragen. Dabei sind weder der Siebrahmen noch die Schallleiter abgestimmt, auch das vorsehen von auf den Ultraschallkonverter abgestimmten Zuleitungsresonatoren ist nicht mehr nötig, sondern diese werden durch einfache Zuleitungsstücke oder Zuleitungsschallleiter ersetzt. Die Anregungsform entspricht dabei der erzwungenen Schwingung eines harmonischen Oszillators mit einer Kraftamplitude $F_0$. Die allgemeine Lösung der zugehörigen Differentialgleichung für ein System mit Masse M, Eigenfrequenz $\omega_0$ und Dämpfungskonstante $\Gamma$ hat die Gestalt

$$X(t) = A\sin(\omega t) + B\cos(\omega t)$$

wobei die Dispersionsamplitude B darstellbar ist als:

$$B = \frac{F_0}{M} \frac{\left(\omega_0^2 - \omega^2\right)}{\left(\omega_0^2 - \omega^2\right)^2 + \Gamma^2 \omega^2}$$

und für das Verhältnis zwischen Dispersionsamplitude B und absorptiver Amplitude A gilt:

$$\frac{B}{A} = \frac{\omega_0^2 - \omega^2}{\Gamma \omega}$$

Für große Frequenzabstände zwischen Eigenfrequenz des Systems und Anregungsfrequenz wird die absorptive Amplitude A vernachlässigbar, und es gilt in guter Näherung:

$$B = \frac{F_0}{M\left(\omega_0^2 - \omega^2\right)}$$

Damit wird deutlich, dass bei Anregung einer Dispersionsschwingung der für die Effizienz des Siebprozesses hochrelevante Parameter Anregungsamplitude proportional zur Kraftamplitude $F_0$ ist und daher sehr gezielt kontrolliert werden kann. Dies ist aber nicht nur über einen speziellen Bereich des Siebs der Fall, denn da eine Dispersionsschwingung des Systems angeregt wird, müssen die entsprechenden Bauteile keine Resonanzbedingung mehr erfüllen, was eine Optimierung der Bauteilgeometrie im Hinblick auf die Verteilung der Schallamplitude über das Siebgewebe ermöglicht.

Als den Suchbereich definierende Parameter haben sich ein Frequenzbereich von 33 bis 37 kHz bei Strömen zwischen 0 und 0,5 A und Spannungen zwischen 0 und 600 V besonders bewährt, wobei die bevorzugte Schrittweite 500μsec ist.

Vorteilhafterweise verwendet man als Kriterium zur Auswahl des Arbeitspunktes die mit der Schwingungsamplitude des angeregten Systems korrelierte an das Gesamtsystem abgegebene Leistung (Verlustleistung), die von dem Quadrat der Schwingungsamplitude und der Kontaktfläche abhängt. Dieser Zusammenhang zeigt, dass es nicht allein darauf ankommt, die Amplitude eines einzigen Schallleiters, etwa durch Betrieb in seiner Resonanz, zu maximieren, sondern dass es ausserdem wesentlich ist, eine große Kontaktfläche anzuregen. Relevant kann die an das Gesamtsystem abgegebene Leistung bei einer einzigen festen Frequenz sein, aber es erweist sich oft auch als vorteilhaft, die bei Variation der Anregungsfrequenz über die gewählte Umgebung des Arbeitspunktes hinweg an das System abgegebene Leistung zu betrachten. Da in der Regel eine Anregung mittels einer Dispersionsamplitude erfolgt, hat man auch keine Probleme mit lokaler Erwärmung und im Gegensatz zur Situation bei dem Resonanzbetrieb eines Schallleiters Kontrolle über thermische Effekte auf das zu bewegende oder zu siebende Material.

Eine bevorzugte Ausführungsform sieht vor, den Arbeitspunkt mit der höchsten an das Gesamtsystem abgegebenen Leistung bei einer festen Frequenz oder über einen Frequenzbereich hinweg zu verwenden. In diesem Fall wird beim Durchfahren der Generatorparameter des Suchbereiches jeweils der aktuelle Wert der an das Gesamtsystem abgegebenen Leistung bestimmt, mit dem gespeicherten bisher höchsten Wert verglichen und dann zusammen mit den zu seiner Erreichung führenden Generatorparametern gespeichert, wenn der Wert höher ist als der bisher höchste Wert.

Es ist aber auch die benutzerdefinierte Vorgabe eines anderen Sollwertes möglich, dem die an das Gesamtsystem abgegebenen Leistung möglichst nahe kommen soll, was insbesondere, wenn das System mit temperaturempfindlichen Materialien arbeiten soll, vorteilhaft sein kann.

In diesem Fall wird vorteilhafterweise beim Durchfahren des Frequenzbereiches vor dem Vergleich mit dem bisher besten Wert der Sollwert von der an das Gesamtsystem abgegebenen Leistung abgezogen und der Wert dann gemeinsam mit den Generatorparametern, mit denen er erreicht wird, als neuer bester Wert abgespeichert, wenn die Differenz zwischen Sollwert und für den gegebenen Generatorparametersatz bestimmtem Wert kleiner ist als der bisherige beste Wert.

In einer wegen ihrer hohen Effizienz besonders zu bevorzugenden Ausführungsform des Verfahrens werden mehrere anzuregende Strukturen gleichzeitig mittels eines einzigen Generators und eines einzigen oder mehreren Ultraschallkonvertern angeregt. Nach dem Stand der Technik ist dies in der Regel nicht möglich, da fertigungstechnische Variationen und Variation der akustischen Parameter der anzuregenden mechanischen Körper ausreichen, um deren Resonanzfrequenzen gegeneinander zu verschieben, was wiederum zu einem Phasenverhalten des Gesamtsystems führt, das zum Versagen von Generatoren mit Phasenregelung führt.

In einer weiteren vorteilhaften Weiterentwicklung dieser Vorgehensweise, die insbesondere von Interesse sein kann, wenn sich bei der gemeinsamen Anregung mehrerer anzuregender Strukturen gravierende Unterschiede hinsichtlich der Effizienz der Anregung ergeben, wird die Betriebsfrequenz beim Betrieb in einem bestimmten Bereich um den Arbeitspunkt herum variiert. Diese Vorgehensweise kann zu einem Ausgleich der Effizienzen führen.

Bei der Festlegung des Bereiches der Frequenzvariation sind verschiedene Vorgehensweisen möglich. In der einfachsten Ausführungsform des Verfahrens wird einfach ein Frequenzintervall, zum Beispiel +/- 1000 Hz vom Nutzer festgesetzt, das dann um den gefundenen Arbeitspunkt herum gelegt wird.

Aufwändiger ist die Festlegung des Bereiches der Frequenzvariation unter Verwendung von Schwellenwerten, die auf einen bestimmten Leistungsabfluss bzw. einen bestimmten Strom und/oder eine bestimmte Spannung relativ zur maximalen Leistungsaufnahme bzw. einem bestimmten Strom und/oder einer bestimmten Spannung, z.B. 50% der maximalen Werte dieser Größen, bezogen sind. Dabei werden die Frequenzwerte als Grenzen des Variationsbereiches festgesetzt, bei denen die Schwellenwerte unterschritten werden. Bei dieser Ausgestaltung wird in vorteilhafter Weise die abgegebene Leistung durch den Bezug zum Leistungsspektrum optimiert; bei Siebsystemen mit klar definierten Resonanzen wird sich ein kleinerer Variationsbereich um den Arbeitspunkt herum einstellen als bei Siebsystemen mit sehr flachen Resonanzen. Eine andere Möglichkeit zur automatisierten Festlegung der Grenzen der Frequenzvariation besteht darin, automatisch die niedrigste und die höchste Frequenzposition zu finden, bei der ein vorgegebener Wert der Leistungsabgabe bzw. der Spannung oder des Stroms erreicht werden und diese Positionen dann als Grenze für die Bereichsvariation zu verwenden. Dies ist insbesondere vorteilhaft, wenn in mehreren Bereiche im Schwingungsspektrum eine starke Leistungsaufnahme auftritt.

In einer anderen Ausgestaltung des Verfahrens, die für ihre Ausführung erfordert, dass Mittel zur grafischen Darstellung der durch den Generator ermittelten Abhängigkeit zwischen Leistungsaufnahme des Systems bzw. Strom und/oder Spannungswerten und Anregungsfrequenz vorgesehen sind, wird diese Abhängigkeit grafisch dargestellt und die Grenzen des Variationsbereiches werden vom Anwender manuell definiert. Bei dieser Vorgehensweise können Siebe mit auseinanderliegenden Frequenzgruppen optimiert angesteuert werden. Auch ein verwandtes automatisiertes Verfahren ist denkbar, indem ein einmal gewählter Frequenzbereich z.B. durch Vergleich der Integrale über die durch den Generator bestimmten Größe über den gesamten untersuchten Frequenzbereich und den Frequenzbereich mit den gerade gewählten Grenzen. Unterschreitet letzteres einen bestimmten Bruchteil des ersteren, ist dies ein Zeichen, dass für die Durchsatzerhöhung signifikante Bereich noch nicht durch die Frequenzvariation abgedeckt werden.

Für hohe Stabilität der Durchführung des Verfahrens ist es vorteilhaft, den Generator unterhalb seiner Nennleistung zu betreiben.

Es hat sich als sinnvoll erwiesen, die Leistungsabgabe des Generators während der Suche nach dem Arbeitspunkt zu drosseln, so dass der Generator während der Suche nach dem Arbeitspunkt weniger Leistung bereitstellt als beim folgenden Betrieb an diesem Arbeitspunkt. Dadurch wird eine Beschädigung des Systems, wenn bei der Frequenzvariation eine Resonanz mit hoher Güte getroffen wird, verhindert.

Die erfindungsgemäße Vorrichtung nach Anspruch 13 weist, wie ein konventionelles System zur Anregung mittels Ultraschall, einen Generator, einen Ultraschallkonverter und mindestens eine anzuregende mechanische Struktur auf. Der Generator weist Mittel zur Variation der Anregungsfrequenz über einen Frequenzbereich zwischen 33 und 37 kHz sowie Bereitstellung von Strömen zwischen 0 und 0,5 A und Spannungen zwischen 0 und 600 V auf. Darüber hinaus ist erfindungsgemäß mindestens ein Sensor zur Messung der bei einer gegebenen Anregungsfrequenz durch den Generator abgegebenen auftretenden Spannungs- und Stromwerte vorgesehen aus dessen Messdaten die an das Gesamtsystem abgegebenen Leistung bestimmt wird.

Weiter umfasst das erfindungsgemäße System einen Speicher, in dem einerseits von einem Nutzer eingebbare angestrebte Werte für die Verlustleistung abgespeichert werden können und andererseits Parameterwerte, für die die angestrebten Werte erreicht oder bestmöglicht erreicht werden, gespeichert werden können. Insbesondere kann der Speicher auch so dimensioniert werden, dass die vom Generator beim Durchfahren seines gesamten Frequenzbereiches in Abhängigkeit von der Frequenz am jeweiligen Messpunkt bestimmten Messwerte gespeichert werden. Es ist aber auch möglich, diese Daten an einen PC zu übertragen und dort zu speichern.

Dabei ist die Verwendung eines Ultraschallkonverters, der für große Amplituden ausgelegt ist, um den Wegfall des für den Betrieb in Resonanzfrequenz des Ultraschallkonverters typischen Aufschaukelns der Resonanzamplitude zu kompensieren, notwendig. Für viele Anwendungen hat sich hier eine typische Amplitude von 6μm Spitze-Spitze als ausreichend herausgestellt.

In einer besonders vorteilhaften Ausführungsform wird dabei der Ultraschallkonverter außerhalb des Pulverflusses angeordnet.

Nützlich ist es auch, einen Zuleitungsschallleiter vorzusehen, der zwischen dem Ultraschallkonverter und dem direkt angeregten Schallleiter oder Siebrahmen angeordnet ist. Dieser Zuleitungsschallleiter kann als linearer oder gekrümmter Leitungsstab ausgeführt sein und wahlweise zur Anregung von Biege- oder Longitudinalschwingungen ausgelegt werden.

Insbesondere ist es bei entsprechender Ausgestaltung des Zuleitungsschallleiters möglich, die Erregungsamplitude im Hinblick auf die verwendete Sieb- und Schallleitergeometrie sowie die zu verwendenden Pulversorten zu optimieren.

Weiterhin kann es gerade bei ausgedehnten Schallleitern von Nutzen sein, den Schallleiter an mehr als einer Stelle anzuregen und somit mehrere Zuleitungsschallleiter zu verwenden, um etwaige allzu grosse Dämpfung zu kompensieren. Eine solche Anordnung lässt sich bei Verwendung nur eines Ultraschallgenerators entweder parallel, d.h. mit gleichzeitiger Anregung über beide Schallleiter, oder sequentiell, d.h. abwechselnd betreiben. Die letztgenannte Lösung ist besonders kosteneffizient, reduziert aber den Durchsatz. Verwendet man hingegen einen zweiten Ultraschallgenerator zur Anregung des zweiten Zuleitungsschallleiters, so ergibt sich neben einer homogeneren Schwingungsamplitude auch noch der Vorteil, dass in der Regel die Frequenzen nicht exakt abgestimmt sind und keine identischen, sondern um typischerweise einige 100Hz verschieden voneinander sind. Dies führt zu einer niederfrequenten Schwebung, die für bestimmte Pulversorten vorteilhaft auf das Durchflussverhalten wirkt.

In einer vorteilhaften Ausgestaltung wird der Schallleiter L-förmig oder als Vierkantrohr ausgeformt, da diese Form hohe Steifigkeit gegenüber senkrecht wirkenden Kräften aufweist und der kurze Schenkel des L oder des Vierkantrohres als Kontakt-oder Klebefläche zum Siebgewebe dienen kann.

Eine andere Anordnung sieht vor, dass mehrere Schallleiter auf dem Siebgewebe angeordnet sind, die mittels Schallbrücken mit einem ersten Schallleiter, der angeregt wird, in Verbindung stehen. Auf diese Weise sind sehr homogene Verteilungen des Schalls auf sehr großen Sieben besonders günstig zu erzielen.

Noch andere vorteilhafte Schallleitergeometrien sind ringförmige Schallleiter, eckige Schalleiter und kreissegmentförmige Schallleiter.

Eine weitere vorteilhafte Ausführung zur optimierten Verteilung der Schallenergie über die Siebfläche besteht darin, Resonatorplatten am Schalleiter anzuschweißen, über welche dann der Kontakt zur Siebfläche hergestellt wird. Eine bevorzugte Ausführungsform sind tellerförmige Resonatoren mit einem Durchmesser von 40-60 mm und einer Dicke von ca 1.5 mm, es können aber auch rechteckige oder quadratische Resonatoren verwendet werden.

Eine besonders bevorzugte Ausführungsform sieht vor, zumindest teilweise als Schallbrücken zwischen verschiedenen Schallleitern und/oder als Verbindungsstücke zum Siebrahmen einzelne oder in Reihe hintereinandergeschaltete Amplitudenmodulatoren vorzusehen. Als Amplitudenmodulatoren lassen sich beispielsweise Rundstäbe verwenden, die Abschnitte mit unterschiedlichem Radius aufweisen, wobei die Länge auf wählbare Frequenzen abgestimmt sein kann, wodurch selektiv in einzelnen Schallleitern des Systems eine lokale Modifikation der Schwingungsamplitude in bestimmten Frequenzbereichen erzielt wird. Ebenso ist es möglich, Abschnitte mit rechteckigen Querschnitte vorzusehen, die eine verbesserte Steifigkeit aufweisen. Sie kommen bevorzugt bei Sieben zum Einsatz, die eine hohe Steifigkeit zur Unterstützung für das aufliegende Gewicht des Pulvers benötigen. Mit diesen Amplitudenmodulatoren können auch Querverstrebungen innerhalb des Schallleiters angebracht werden, um dem Druck des Siebgutes entgegenzuwirken. Damit kann der Hersteller z. B. auf ein zusätzliches mechanisches Trägerkreuz innerhalb der Siebfläche verzichten.

Anhand der folgenden Figuren sollen Ausführungsbeispiele der Erfindung im Detail diskutiert werden. Es zeigt:

Fig.1:　　eine Siebanordnung mit kreisförmiger Schallleiterstruktur und gebogenem Zuleitungsschallleiter.

Fig.2:　　eine Siebanordnung mit einer komplexen Schallleiterstruktur.

Fig.3:　　eine Siebanordnung, bei der zwischen Schallleiter und Siebfläche zusätzlich tellerförmige Resonatoren angeordnet sind.

Fig.4:　　eine Siebvorrichtung mit zwei ringförmigen Schallleitern, die miteinander und mit dem Rahmen jeweils über unterschiedliche Aneinanderreihungen von Amplitudenmodulatoren verbunden sind.

Fig. 5:　　ein Ergebnis einer Frequenzanalyse eines gekoppelten Systems

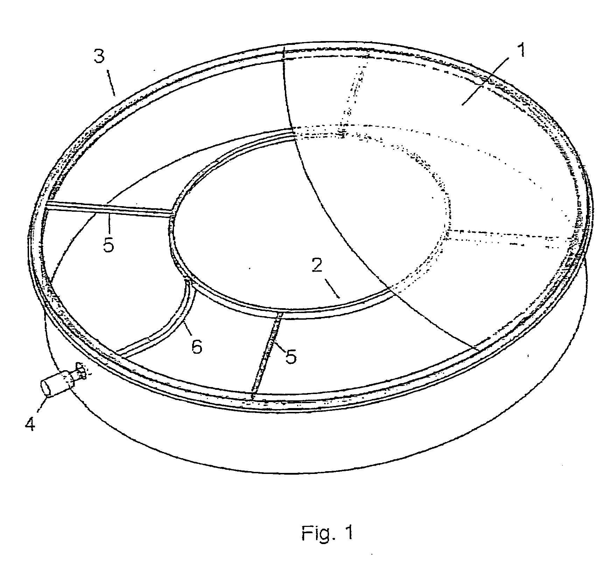

Anhand von Fig. 1 wird zunächst das Vorgehen beim Ultraschallsieben anhand einer beispielhaften Vorrichtung erläutert. In innigem Kontakt mit dem Siebgewebe 1, das am Siebrahmen 3 befestigt ist, befindet sich der Schallleiter 2. Mittels eines vom nicht dargestellten Generator in einer gegebenen Schwingungsfrequenz betriebenen Ultraschallkonverters 4 wird ein Zuleitungsschallleiter 6 in Schwingung versetzt, der im dargestellten Ausführungsbeispiel gebogen ausgeführt ist, aber beispielsweise auch, linear ausgeführt sein kann. Der Zuleitungsschallleiter 6 regt den Schallleiter 2 an, der mittels der Verbindungselemente 5 mit dem Siebrahmen 3 verbunden ist. In dieser Anordnung ist es nicht nur möglich, den Konverter außerhalb des Pulverflusses anzuordnen, sondern es werden auch über die Verbindungselemente 5 die im Schallleiter 2 angeregten Schwingungen auf den Siebrahmen übertragen. Alternativ ist auch die Erregung des Siebrahmens 3 über den Zuleitungsschallleiter 6 und Übertragung der Schwingungen mittels der Verbindungselemente 5 auf den Schallleiter 2 möglich.

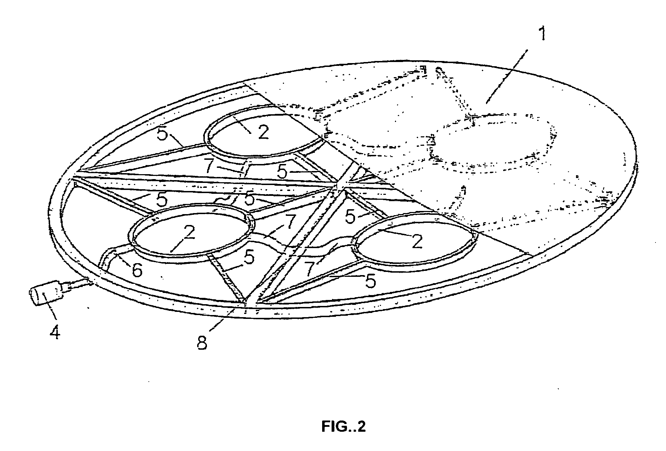

In beiden Fällen wird dadurch eine gleichmäßigere Verteilung des Schalls auf dem Siebgewebe erzielt. Diese kann weiter optimiert werden, da das angeregte System im Gegensatz zur Situation bei bekannten Siebsystemen mit auf eine Resonanz des Ultraschallkonverters abgestimmten Schallleitern nicht auf eine Resonanzfrequenz abgestimmt betrieben wird, sondern der Frequenzarbeitspunkt durch den Generator an die Gegebenheiten des Systems angepasst wird, wodurch die Flexibilität hinsichtlich Form und Größe bei der Ausgestaltung der unterschiedlichen Rahmen/Schallleiter erheblich erhöht wird. Figur 2 zeigt ein Beispiel für eine solche verbesserte Anordnung, deren Analogon für den resonanten Betrieb nicht oder nur unter erheblichem Aufwand unter Einbeziehung von vier auf identische Frequenz abgestimmten Resonatoren möglich wäre. Hier sind vier ringförmige Schallleiter 2, die miteinander über Schallbrücken 7 in Verbindung stehen, über Verbindungselemente 5 mit dem Siebrahmen 3 bzw. einem Trägerkreuz 8 verbunden. Einer der Schallleiter 2 wird durch einen Ultraschallkonverter 4 angeregt. Die Schwingung wird über die Schallbrücken 7 auf die anderen Schallleiter 4 und über die Verbindungselemente 5 auf Siebrahmen und Trägerkreuz weitergeleitet. Insbesondere wird auch der Betrieb eckiger Schallleiterstrukturen möglich.

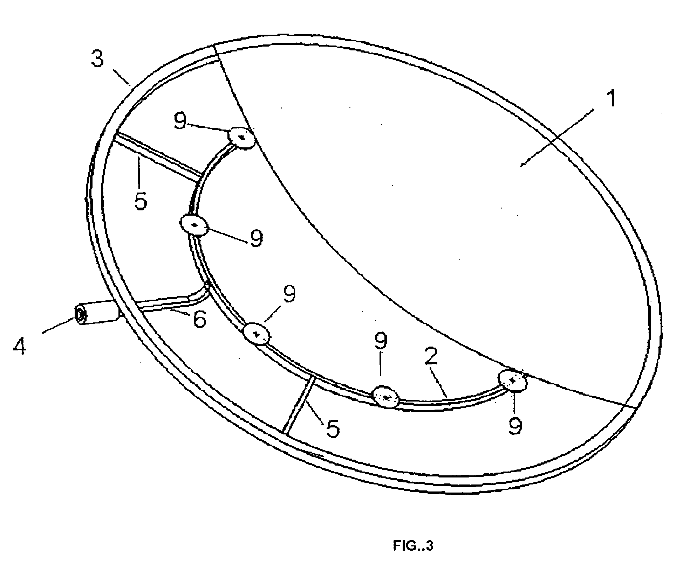

In Fig.3 wird eine Ausführungsform vorgestellt, in der zwischen Schalleiter 2 und Siebgewebe 1 mehrere Resonatorteller 9 angebracht sind. Ihre typische Anzahl liegt zwischen 6 und 10, aber je nach Sieb- und Schallleitergeometrie kann auch eine andere Zahl von Resonatortellern 9 vorteilhaft sein. Durch diese Maßnahme wird eine zusätzliche Homogenisierung der Übertragung der Schallenergie auf das Siebgewebe erzielt.

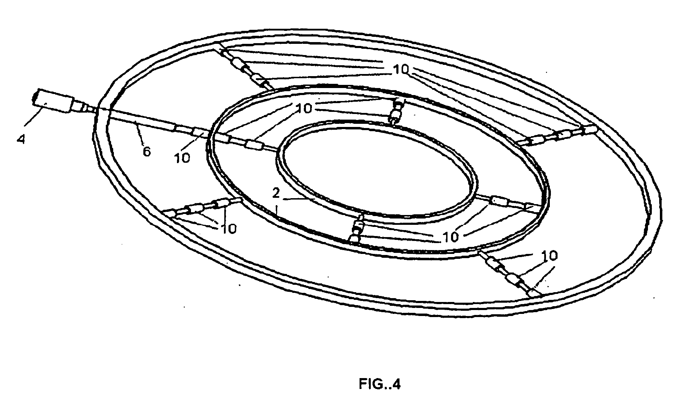

Die in der Figur 4 dargestellte Anordnung verdeutlicht Vorteile, die mit der Ausgestaltung von Schallbrücken 5 und/oder Verbindungselementen 7 in Form von Amplitudenmodulatoren 10 einhergehen. In Figur 4 erkennt man eine Siebvorrichtung, bei der unterschiedliche Hintereinanderschaltungen von Amplitudenmodulatoren 10 zum Einsatz kommen. Angeregt wird hier zunächst über einen Zuleitungsschallleiter 6 ein äußerer kreisförmiger Schallleiter 2, der über zwei Amplitudenmodulatoren 10 mit einem inneren kreisförmigen Schallleiter 2 und über drei in umgekehrter Richtung angeordnete Amplitudenmodulatoren 10 mit dem Rahmen verbunden ist.

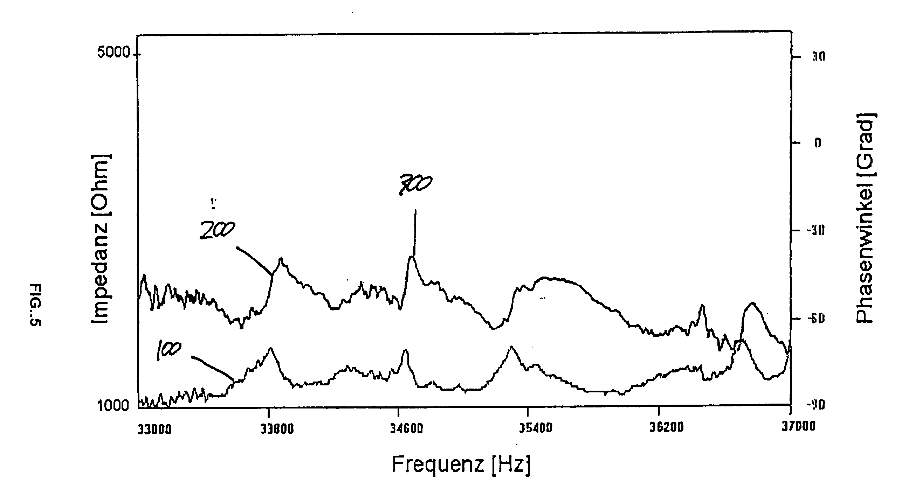

Die unten in der Figur 5 gezeigte Phasenwinkelkurve 100 zeigt eine Messung eines Phasenwinkels als Funktion einer Anregungsfrequenz für ein angeregtes gekoppeltes mechanisches System. Gemäß den aus dem Stand der Technik bekannten Verfahren zur Schwingungsanregung müsste ein stabiler Nulldurchgang des Phasenwinkels in dieser Kurve identifiziert werden, um die erwünschte Anregung in einer Eigenfrequenz durchführen zu können. Ein Blick auf die Kurve 100 zeigt dem Fachmann, dass eine auf diesem Regelungsprinzip basierende Anregung des Systems nicht möglich ist.

Das erfindungsgemäße Verfahren umgeht diese Problematik durch die Verwendung eines anderen Regelungskriteriums. Zur Auswahl des Arbeitspunktes, an dem gearbeitet werden soll, wird die Frequenz schrittweise zwischen 33kHz und 37 kHz variiert. Es ergibt sich für jede so ausgewählte Frequenz ein Strom und/oder eine Spannung des Generators aus der vom System aufgenommenen Gesamtleistung. Der mit einem Sensor gemessene Wert dieses Stroms und/oder dieser Spannung wird verwendet, um die bei dieser Frequenz an das anzuregende System abgegebene Leistung als verlustleistung zu bestimmen.

Eine Vorgehensweise dazu kann darin bestehen, dass zunächst bei allen Frequenzen die Spannung konstant gehalten wird, während der Strom mit der Leistungsaufnahme des Systems steigt oder fällt. Es kann aber auch bei konstantem Strom die Spannug verändert werden.

Auf diese Weise kann die in Figur 1 gezeigte Impedanzkurve 200, die mit der an das Gesamtsystem abgegebene Verlustleistung als Funktion der Anregungsfrequenz korreliert ist, bestimmt. Als Kriterium zur Auswahl des Arbeitspunktes, bei dem der Generator dann betrieben wird, wird beispielhaft in der hier beschriebenen Ausführungsform der Erfindung verwendet, dass der bevorzugte Arbeitspunkt derjenige ist, bei dem die höchste abgegebene Verlustleistung auftritt. Dieser Punkt 300 ist auch bei dem komplexen angeregten System leicht zu bestimmen. Es sind aber auch andere Auswahlkriterien möglich, die zum Beispiel von der erzielbaren integralen Leistung über einen gewissen Frequenzbereich hinweg abhängen können.

An dem so bestimmten Arbeitspunkt erfolgt dann der Betrieb des ultraschallangeregten Systems. Bei Anregung mehrerer Strukturen wird die Frequenz vorteilhafterweise kontinuierlich um den festgehaltenen Arbeitspunkt herum durchgefahren (gesweept).

Bezugszeichenliste

1      Siebgewebe

2      Schallleiter

3      Siebrahmen

4      Ultraschallkonverter

5      Verbindungselement

6      Zuleitungsschallleiter

7      Schallbrücke

8      Trägerkreuz

9      Resonatorteller

10      Amplitudenmodulator

100      Phasenwinkelkurve

200      Impedanzkurve

300      Arbeitspunkt

**Patentansprüche**

1. verfahren zur Ultraschallanregung von Strukturen beliebiger Geometrie, umfassend die Schritte:

     a) Herstellen einer Verbindung zwischen einem Generator, einem Ultraschallkonverter (4) und mindestens einem anzuregendem mechanischen System
     b) Durchfahren eines Frequenzbereiches zum Bestimmen eines Arbeitspunktes, wobei bei jeder angefahrenen Frequenz die Leistungsaufnahme des anzuregenden Systems einen Strom oder eine Spannung, die der Generator abgibt, bestimmt, die mit einem Sensor gemessen wird, so dass ein Messwert des Sensors die Leistungsabgabe an das anzuregende Systems wiedergibt
     c) Durchführen einer Ultraschallanregung an dem bestimmten Arbeitspunkt oder in einer Umgebung um den bestimmten Arbeitspunkt herum, wobei der einmal festgelegte Arbeitspunkt oder die einmal gewählte Umgebung um den Arbeitspunkt herum nicht mehr verändert wird.

2. Verfahren gemäß Anspruch 1,
**dadurch gekennzeichnet, dass** als Kriterium für die Auswahl des Arbeitspunktes im Verfahrensschritt b) die an das anzuregende System abgegebene Leistung verwendet wird.

3. Verfahren gemäß Anspruch 1 oder 2,
**dadurch gekennzeichnet, dass** der im Verfahrensschritt b) bestimmte Arbeitspunkt derjenige ist, bei dem die höchste an das anzuregenden System abgegebene Leistung erreicht wird.

4. Verfahren gemäß Anspruch 3,
**dadurch gekennzeichnet, dass** im Schritt b) beim Durchfahren des Frequenzbereiches jeweils ein aktueller Wert der an das anzuregende System abgegebenen Leistung bestimmt wird, mit einem gespeicherten bisher höchsten Wert verglichen wird und dann zusammen mit den zu seiner Erreichung führenden Spannungs- oder Strom- und Frequenzwerten gespeichert wird.

5. Verfahren gemäß Anspruch 2,
**dadurch gekennzeichnet, dass** der im Verfahrensschritt b) bestimmte Arbeitspunkt derjenige ist, bei dem ein Wert der an das anzuregende System abgegebenen Leistung erreicht wird, der einem vorgegebenen Sollwert am nächsten kommt.

6. Verfahren gemäß Anspruch 5,
**dadurch gekennzeichnet, dass** beim Durchfahren Frequenzbereiches der Sollwert von der an das anzuregende System abgegebenen Leistung abgezogen und der dabei erhaltene Wert dann gemeinsam mit dem Spannungs-oder Strom- und Frequenzwert, bei dem er erreicht wird, als neuer bester Wert abgespeichert wird, wenn der durch Differenzbildung erhaltene Wert kleiner ist als der bisher gespeicherte beste Wert.

7. Verfahren gemäß einem vorstehenden Anspruch,
**dadurch gekennzeichnet, dass** im Verfahrensschritt c) mehrere mechanische Systeme gleichzeitig angeregt werden.

8. Verfahren gemäß Anspruch 7,
**dadurch gekennzeichnet, dass** während des Verfahrensschritts c) die Frequenz des Generators um einen bestimmten Bereich um den festgehaltenen Arbeitpunkt herum variiert wird.

9. Verfahren gemäß Anspruch 8,
**dadurch gekennzeichnet, dass** die Festlegung des Bereiches der Frequenzvariation unter Verwendung von Schwellenwerten, die auf einen bestimmten Leistungsabfluss bzw. einen bestimmten Strom oder eine bestimmte Spannung relativ zur maximalen Leistungsaufnahme bzw. einem bestimmten Strom oder einer bestimmten Spannung bezogen sind, erfolgt, indem die dem Arbeitspunkt nächstliegenden Frequenzwerte als Grenzen des Variationsbereiches festgesetzt werden, bei denen die Schwellenwerte unterschritten werden, oder indem die niedrigste und die höchste Frequenzposition, bei der ein vorgegebener Wert der Leistungsabgabe bzw. der Spannung oder des Stroms erreicht werden, bei denen die Schwellenwerte unterschritten werden.

10. Verfahren gemäß Anspruch 8,
**dadurch gekennzeichnet, dass** die durch den Generator ermittelten Abhängigkeit zwischen Leistungsaufnahme des Systems bzw. Strom oder Spannungswerten und Anregungsfrequenz grafisch dargestellt wird und die Grenzen des Variationsbereiches vom Anwender manuell definiert werden.

11. Verfahren gemäß einem vorstehenden Anspruch,
**dadurch gekennzeichnet, dass** der Generator während des Verfahrensschritts c) unterhalb seiner Nennleistung betrieben wird.

12. Verfahren gemäß einem vorstehenden Anspruch,
**dadurch gekennzeichnet, dass** der Generator während des Verfahrensschritts b) an jedem Punkt, insbesondere auch am Arbeitspunkt, mit einer geringeren Leistungsabgabe betrieben wird als während des Verfahrensschritts c).

13. Vorrichtung zur Ultraschallanregung von Strukturen beliebiger Geometrie mittels eines Verfahrens gemäß eines der Ansprüche 1 bis 12 mit einem Generator, mindestens einem Ultraschallkonverter (4) und mindestens einer mechanischen Struktur,
**dadurch gekennzeichnet, dass** der Generator Steuerungsmittel für Spannung, Strom und Frequenz, mittels derer diese Größen über einen gewissen Bereich zum ßestimmen eines Arbeitspunktes variiert werden können und mindestens einen Sensor aufweist zur Bestimmung eines Stroms oder einer Spannung, die der Generator abgibt, so dass ein Messwert des sensors die Leistungsabgabe an das zu erregende system bei jeder Angefahrenen Frequenz wiedergibt
und über einen Speicher zur Speicherung einerseits von durch einen Benutzer eingegebenen Sollwerten für die an das Gesamtsystem abgegebenen Leistung und andererseits von Parameterwerten für Spannung, Strom und Frequenz, bei denen die angestrebten Sollwerte erreicht oder bestmöglich angenähert werden, verfügt.

14. Vorrichtung gemäss Anspruch 13,
**dadurch gekennzeichnet, dass** mindestens ein Zuleitungsschallleiter (6) zwischen Ultraschallkonverter (4) und Schallleiter (2) oder Siebrahmen (3) angeordnet ist.

15. Vorrichtung gemäss Anspruch 14,
**dadurch gekennzeichnet, dass** die Anordnung des Zuleitungsschallleiters (6) zur Anregung von Biegeschwingungen oder zur Anregung von Longitudinalschwingungen geeignet ist.

16. Vorrichtung gemäss Anspruch 15,
**dadurch gekennzeichnet, dass** ein Zuleitungsschallleiter (6) vorgesehen ist, der zur Skalierung der Anregungsamplitude geeignet ist.

17. Vorrichtung gemäss Anspruch 16,
**dadurch gekennzeichnet, dass** mehrere Zuleitungsschallleiter (6) vorgesehen sind.

18. Vorrichtung gemäss einem der Ansprüche 14 bis 17,
**dadurch gekennzeichnet, dass** mehrere miteinander in schallleitender Verbindung stehende Schallleiter (2) vorgesehen sind, von denen nur einer zur Anregung vorgesehen ist.

19. Vorrichtung gemäss einem der Ansprüche 14 bis 18,
**dadurch gekennzeichnet, dass** in einem kreisförmigen Siebrahmen (3), der durch ein Trägerkreuz (8) in vier Teilsegmente unterteilt ist, in jedem Teilsegment ein kreisförmiger Schallleiter (2) vorgesehen ist, von denen einer direkt angeregt wird, wobei jeder Schallleiter (2) über Schallbrücken (7) mit den in benachbarten Teilsegmenten angeordneten Schallleitern (2) verbunden ist, wobei jeder Schallleiter (2) mittels Verbindungselementen mit dem Trägerkreuz (8) und dem Siebrahmen (3) verbunden ist.

20. Vorrichtung gemäss einem der Ansprüche 14 bis 19, **dadurch gekennzeichnet, dass** zwischen Siebfläche (1) und Schallleiter (2) am Schallleiter (2) mehrere Resonatorplatten fest angebracht sind.

**Claims**

1. Method for ultrasound excitation of structures with arbitrary geometry, comprising the steps:

   a) providing a connection between a generator, an ultrasound converter (4) and at least one mechanical system that is to be excited

   b) going through a frequency range in order to determine a working point, wherein at each frequency the power accepted by the system to be excited determines a current or a voltage output of the generator that is measured by a sensor, so that a measurement of the sensor represents the power provided by the generator to the system to be excited

   c) performing the ultrasonic excitation at the determined working point or in a region around the determined working point, wherein the chosen working point or the chosen region around the working point are not changed any more after chosing.

2. Method according to claim 1, **characterized in that** as criterium for the choice of the working point in step b) of the method the power provided to the system to be excited is used.

3. Method according to claim 1 or 2, **characterized in that** the working point determined in step b) is the one at which the highest amount of power provided to the system to be excited is reached.

4. Method according to claim 3, **characterized in that** in step b) while going through the frequency range each time an actual value of the power provided to the system to be excited is determined, compared to a saved value that is the highest value so far and saved together with the voltage- or current- and frequency-values that determined it.

5. Method according to claim 2, **characterized in that** the working point determined in step b) is the one at which a value of power provided to the system to be excited is the one that is closest to a predetermined specified value.

6. Method according to claim 2, **characterized in that** while going through the frequency region the specified value is subtracted from the power provided to the system to be excited and the thus obtained value is stored along with the value of the voltage or the current and the frequency at which it is obtained as new best value if the value obtained by the subtraction is smaller than the previously stored best value.

7. Method according to one of the previous claims, **characterized in that** in method step c) several mechanical systems are excited simultaneously.

8. Method according to claim 7, **characterized in that** during step c) of the method the frequency of the generator is varied in a predetermined region around the fixed working point.

9. Method according to claim 8, **characterized in that** the region of the frequency variation is predetermined using threshold values that are related to a defined power outflow, to a defined current or to a defined voltage relative to a maximum power outflow, a defined current or a defined voltage, respectively, by defining the frequency values as borders of the region of variation that are closest to the working point and at which the threshold values are undercut or by the lowest and the highest frequency position, at which a predetermined value of power outflow, voltage or current, respectively, is reached, at which the frequency thresholds are undercut.

10. Method according to claim 9, **characterized in that** the dependence between power acceptance of the system or current and/or voltage values, respectively, is displayed graphically and the borders of the variation region are defined manually by a user.

11. Method according to one of the previous claims, **characterized in that** the generator is operated below its maximum output.

12. Method according to one of the previous claims, **characterized in that** the generator is operated during step b) at each point, especially also at the working point, with a smaller power output as during step c).

13. Device for ultrasonic excitation of structures with arbitrary geometry using a method according to one of claims 1 to 12 with a generator, at least one ultrasound converter (4) and at least one mechanical structure,

**characterized in that** the generator comprises controlling means for voltage, current and frequency, by which these values can be varied over a given region to determine a working point and at least one sensor for determining a current or a voltage outputted by the generator, so that a measurement value of the sensor represents at each accessed frequency value the power outputted to the system, and a memory for storing on the one hand specified values entered by a user and on the other hand parameter values for voltage, current and frequency at which the specified value is reached or approximated in the best possible way.

14. Device according to claim 13,
**characterized in that** at least one supply sound conductor (6) is arranged between ultrasound converter (4) and sound conductor (2) or screening frame (3).

15. Device according to claim 14,
**charatterized in that** the arrangement of the supply sound conductor (6) is suitable for exciting flexural vibrations or suitable for exciting longitudinal vibrations.

16. Device according to claim 15,
**characterized in that** a supply sound conductor (6) is provided that is suitable for scaling the excitation amplitude.

17. Device according to claim 16,
**characterized in that** several supply sound conductors (6) are provided.

18. Device according to one of claims 14 to 17,
**characterized in that** several sound conductors (2) that are interconnected in a sound conducting way are provided, only one of which is prepared for excitation.

19. Device according to one of claims 14 to 18,
**characterized in that** in a circular screening frame (3) that is divided into four partial segments by a bearing cross (8) a circular sound conductor (2) is provided in each partial segment, one of which is excited directly, wherein each sound conductor (2) is connected via sound bridges (7) to the sound conductors (2) arranged in neighboring partial segments, wherein each sound conductor (2) is connected to the bearing cross (8) and the screening frame (3) via connector elements.

20. Device according to one of claims 14 to 19,
**characterized in that** a plurality of resonator plates (9) are fixedly installed on the sound conductor (2) between screening surface (1) and sound conductor (2).

## Revendications

1. Procédé d'activation par ultrasons de structures ayant une géométrie quelconque comportant les étapes consistant à :

   a) fabriquer une liaison entre un générateur, un convertisseur d'ultrasons (4) et au moins un système mécanique à activer,
   b) balayer une plage de fréquence pour déterminer un point de travail, pour chacune des fréquences balayées, la puissance absorbée par le système à activer, déterminant un courant ou une tension délivrée par le générateur qui est mesurée par un capteur, de sorte qu'une valeur de mesure du capteur reproduise la puissance fournie au système à activer,
   c) mise en oeuvre d'une activation par ultrasons au niveau point de travail déterminé, ou dans un environnement situé autour de ce point de travail, le point de travail fixé une fois ou l'environnement autour de ce point de travail choisi une fois, n'étant plus modifié.

2. Procédé conforme à la revendication 1,
**caractérisé en ce qu'**
en tant que critère pour le choix du point de travail dans l'étape b), on utilise la puissance fournie au système à activer.

3. Procédé conforme à la revendication 1 ou 2,
**caractérisé en ce que**
le point de travail déterminé dans l'étape b) est le point de travail pour lequel on atteint la puissance maximum fournie au système à activer.

4. Procédé conforme à la revendication 3,
**caractérisé en ce que**
dans l'étape b), lors du balayage de la plage de fréquence, on détermine respectivement une valeur actuelle de la puissance fournie au système à activer, on la compare à une valeur maximum enregistrée auparavant, puis on l'enregistre avec la valeur de tension ou de courant et la valeur de fréquence conduisant à son obtention.

5. Procédé conforme à la revendication 2,
**caractérisé en ce que**
le point de travail déterminé dans l'étape b) est le point de travail pour lequel on atteint une valeur de la puissance fournie au système à activer qui est la plus proche d'une valeur de consigne prédéfinie.

**6.** Procédé conforme à la revendication 5, **caractérisé en ce que** lors du balayage de la plage de fréquence, la valeur de consigne est soustraite de la puissance fournie au système à activer, et la valeur ainsi obtenue est ensuite enregistrée avec la valeur de tension ou de courant et la valeur de fréquence pour laquelle elle est atteinte, en tant que nouvelle valeur optimum, lorsque la valeur obtenue par la formation de la différence est inférieure à la valeur optimum enregistrée auparavant.

**7.** Procédé conforme à l'une des revendications précédentes, **caractérisé en ce que** lors de l'étape c), on active simultanément plusieurs systèmes mécaniques.

**8.** Procédé conforme à la revendication 7, **caractérisé en ce que** pendant l'étape c), on fait varier la fréquence du générateur autour d'un domaine défini autour du point de travail fixé.

**9.** Procédé conforme à la revendication 8, **caractérisé en ce que** la détermination de la plage de variation de fréquence est effectuée en utilisant des valeurs de seuil relatives à un flux de puissance déterminé ou à un courant déterminé ou à une tension déterminée par rapport à la puissance absorbée maximum ou à un courant déterminé ou à une tension déterminée, en fixant comme limites du domaine de variation les valeurs de fréquence les plus proches du point de travail pour lesquelles les valeurs de seuil ne sont pas atteintes ou la position de fréquence la plus basse et la plus élevée permettant d'obtenir une valeur prédéfinie de la fourniture de puissance ou de la tension ou du courant pour lesquelles les valeurs de seuil ne sont pas atteintes.

**10.** Procédé conforme à la revendication 8, **caractérisé en ce que** la dépendance déterminée par le générateur entre la puissance absorbée par le système ou les valeurs de courant ou de tension et la fréquence d'activation est représentée graphiquement et les limites de la plage de variation sont définies manuellement par l'utilisateur.

**11.** Procédé conforme à l'une des revendications précédentes, **caractérisé en ce que** pendant l'étape c), le générateur est actionné au-dessous de sa puissance nominale.

**12.** Procédé conforme à l'une des revendications précédentes,

**caractérisé en ce que** pendant l'étape b), à chaque point, en particulier également au point de travail est actionné le générateur avec une fourniture de puissance plus faible que dans l'étape c).

**13.** Dispositif d'activation par ultrasons de structures ayant une géométrie quelconque par la mise en oeuvre d'un procédé conforme à l'une des revendications 1 à 12, comportant un générateur, au moins un convertisseur d'ultrasons (4) et au moins une structure mécanique, **caractérisé en ce que** le générateur comporte des moyens de commande de la tension du courant et de la fréquence au moyen desquels ces grandeurs peuvent être modifiées dans une plage déterminée pour déterminer un point de travail, et au moins un capteur pour déterminer un courant ou une tension délivrée par le générateur, de sorte qu'une valeur de mesure du capteur reproduise la puissance fournie au système à activer pour chacune des fréquences balayées, et est équipé d'une mémoire pour stocker d'une part des valeurs de consigne données par un utilisateur pour la puissance fournie à la totalité du système, et d'autre part des valeurs de paramètres pour la tension, le courant et la fréquence pour lesquelles on atteint les valeurs de consigne recherchées, ou on s'approche autant que possible de ces valeurs.

**14.** Dispositif conforme à la revendication 13, **caractérisé en ce qu'** au moins un conducteur acoustique d'alimentation (6) est monté entre le convertisseur d'ultrasons (4) et un conducteur acoustique (2) ou un cadre filtrant (3).

**15.** Dispositif conforme à la revendication 14, **caractérisé en ce que** le conducteur acoustique d'alimentation (6) a une structure adaptée pour activer des vibrations alternées ou des vibrations longitudinales.

**16.** Dispositif conforme à la revendication 15, **caractérisé en ce qu'** il est prévu un conducteur acoustique d'alimentation (6) adapté pour graduer l'amplitude d'activation.

**17.** Dispositif conforme à la revendication 16, **caractérisé en ce qu'** il est prévu plusieurs conducteurs acoustiques d'alimentation (6).

**18.** Dispositif conforme à l'une des revendications 14 à 17, **caractérisé en ce qu'** il comporte plusieurs conducteurs acoustiques (2) en liaison acoustique les uns avec les autres, dont un seul est prévu pour l'activation.

**19.** Dispositif conforme à l'une des revendications 14 à 18,

**caractérisé par**

un cadre filtrant circulaire (3) subdivisé par une croix support (8), en quatre segments partiels dont chacun comporte un conducteur acoustique circulaire (2) dont l'un est activé directement, chaque conducteur acoustique (2) étant relié par l'intermédiaire de ponts acoustiques (7) avec les conducteurs acoustiques (2) situés dans les segments partiels voisins, et chacun des conducteurs acoustiques (2) étant relié par l'intermédiaire d'éléments de liaison avec la croix support (8) et le châssis filtrant (3).

**20.** Dispositif conforme à l'une des revendications 14 à 19,

**caractérisé en ce que**

plusieurs plaques de résonance sont fixées sur le conducteur acoustique (2) entre la surface filtrante (1) et le conducteur acoustique (2).

Fig. 1

FIG..2

FIG..3

FIG..4

EP 2 049 274 B1

FIG..5

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4418175
- EP 0567551 B1
- US 20020060230 A1